# EUROPÄISCHE PATENTANMELDUNG

(11) **EP 2 327 600 A1**
(43) Veröffentlichungstag der Anmeldung: **01.06.2011**
(21) Anmeldenummer: 10014933.5
(22) Anmeldetag: 24.11.2010
(51) Int. Cl.: B62B 1/20, B62B 1/26, A01G 9/08

(54) **Vorrichtung zum Transportieren von Behältern**

(30) Priorität: 27.11.2009 DE 202009016231 U; 04.03.2010 DE 202010003181 U
(71) Anmelder: Schumann, Günther, 93194 Walderbach (DE)
(72) Erfinder: Schumann, Günther, 93194 Walderbach (DE)
(74) Vertreter: Graf, Helmut

(57) **Zusammenfassung**

Vorrichtung zum Transportieren von Behältern, insbesondere zum Transportieren von Pflanz- oder Blumentöpfen, mit zwei zueinander beabstandeten, stangenförmigen Längselementen, die durch zumindest einen Querträger (3) miteinander verbunden sind.

## Beschreibung

Die Erfindung betrifft eine Vorrichtung zum Transportieren von Behältern, insbesondere von Pflanz- oder Blumentöpfen gemäß dem Oberbegriff des Patentanspruchs 1.

Gattungsgemäße Vorrichtungen zum Transport von Behältern sind grundsätzlich bekannt. Die Druckschrift DE 10 2005 050 886 A1 offenbart eine Vorrichtung zum Transport von Behältern, insbesondere von Pflanzkübeln oder von großen Blumentöpfen. Die Vorrichtung besteht im Wesentlichen aus zwei parallel zueinander verlaufenden, gerade ausgebildeten Längselementen, die durch zwei zueinander beabstandete, senkrecht oder quer zu den Längselementen verlaufende Querträger verbunden sind. Die Querträger sind hierbei in ihrer Länge einstellbar, sodass ein zwischen den Längsträgern und Querträgern aufgenommener Behälter durch Anheben an den jeweiligen freien Enden der Längsträger von zwei Personen transportiert werden kann.

Ausgehend hiervon ist es Aufgabe der Erfindung, eine Vorrichtung zum Transport von Behältern aufzuzeigen, die einen erleichterten Transport selbst von großen, schweren Behältern, insbesondere von Pflanz- oder Blumentöpfen ermöglicht, und zwar auch durch lediglich eine einzige Person. Zur Lösung dieser Aufgabe ist die Vorrichtung entsprechend dem Patentanspruch 1 ausgebildet.

Der wesentliche Aspekt der erfindungsgemäßen Vorrichtung besteht darin, dass die Längselemente zumindest einen Teilbereich aufweisen, der an den Behälter angepasst und zumindest zum abschnittsweisen Umgreifen des Behälters ausgebildet ist und dass zumindest eine Transportrolle vorgesehen ist, deren Drehachse als Schwenkachse zum Anheben eines zwischen den Längselementen aufgenommenen Behälters dient. Dadurch ist es möglich, dass ein Behälter zwischen den Längselementen aufgenommen und zwischen diesen verklemmt durch ein Verschwenken dieser Längselemente um die Drehachse der Transportrolle transportiert wird.

In einer bevorzugten Ausführungsform ist der die beiden Längselemente verbindende Querträger drehgelenkig mit den Längselementen verbunden. Dadurch ist es möglich, dass durch ein Zueinanderschwenken der Längselemente ein seitlicher Druck auf die Außenseite des Behälters ausgeübt und dadurch zusätzlich der Behälter verklemmt wird. Es ist somit ein zangenförmiges Umgreifen des zwischen den Längselementen aufgenommenen Behälters möglich.

Vorzugsweise ist die Länge des Querträgers verstellbar, insbesondere teleskopisch verstellbar ausgebildet. Durch diese Längenverstellbarkeit kann der Abstand der Längselemente im Bereich des Querträgers verändert und damit die Vorrichtung zum Transport von unterschiedlich großen Behältern angepasst werden. Für den Fall das Behälter mit einem kleinen Durchmesser bzw. einer kleinen Grundfläche transportiert werden müssen, lässt sich der Querträger derart zusammenschieben, dass er eine geringe Länge, vorzugsweise eine Länge von 25 - 35 cm aufweist. Für den Fall dass größere Behälter transportiert werden müssen, kann der Querträger beispielsweise auf eine Länge bis zu 60 cm ausgezogen werden.

Vorzugsweise wird die Anpassung der Längselemente an den zu umgreifenden Behälter durch eine Abstandsvariation von Teilbereichen dieser Längselemente zueinander erreicht, sodass durch diese Abstandsvariation zwischen den Längselementen ein zumindest teilweise umfangsseitig begrenzter Aufnahmebereich ausgebildet wird. Vorzugsweise wird dieser Aufnahmebereich durch einen aufgeweiteten oder ausgewölbten mittleren Teilbereich dieser Längselemente gebildet und ist entlang der Mittellängsachse vorder- und rückseitig durch zwei den Abstand der Längselemente zueinander verringernde Elemente begrenzt. Diese den Abstand verringernden Elemente können beispielsweise nach innen gewölbte Bereiche der Längselemente selbst sein. Durch diese Ausformung der Längselemente bzw. des Aufnahmebereichs wird ein im Aufnahmebereich aufgenommenen Behälter umfangseitig an mehreren, paarweise gegenüberliegenden Bereichen umschlossen und dadurch wirksam gegen ein Herausgleiten aus der Transportrichtung gesichert.

Vorzugsweise weisen die Längselemente zumindest in einem Teilbereich an den dem Aufnahmebereich zugewandten Innenseiten rutschhemmende Elemente, beispielsweise in Form von Gummierungen oder Gumminoppen auf. Durch dieses Element kann auch bei nur mäßiger seitlicher Klemmung des Behälters durch die Längsträger ein Herausrutschen dieser vermieden werden.

In einem bevorzugten Ausführungsbeispiel ist ein Spannelement, insbesondere ein Spanngurt, eine Spannkette oder ähnliches vorgesehen, das beabstandet zum Querträger angeordnet ist und zur Erzeugung einer Klemmung des Behälters zwischen den Längsträgern ausgebildet ist. Dadurch kann die vom Benutzer aufzubringende seitliche Klemmkraft auf die beiden Längsträger durch ein unter Zug stehendes Spannelement ersetzt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Nachfolgend wird die Erfindung an einem Ausführungsbeispiel anhand von mehreren Figuren näher beschrieben. Es zeigen:
- Fig. 1: beispielhaft eine erfindungsgemäße Transportvorrichtung mit zusammen geschobenem Querträger in einer perspektivischen Darstellung;
- Fig. 2: beispielhaft eine erfindungsgemäße Transportvorrichtung mit auseinander gezogenem Querträger in einer perspektivischen Darstellung;
- Fig. 3: beispielhaft eine erfindungsgemäße Transportvorrichtung mit einem Blumentopf in Transportstellung;
- Fig. 4: beispielhaft eine weitere Ausführungsform einer erfindungsgemäßen Transportvorrichtung in einer perspektivischen Darstellung.

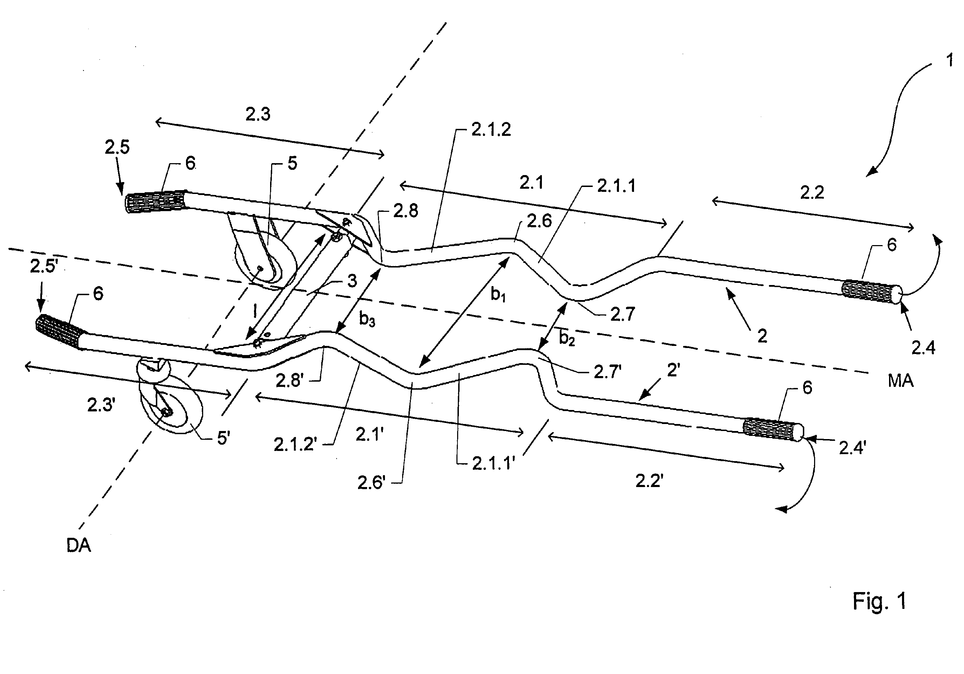

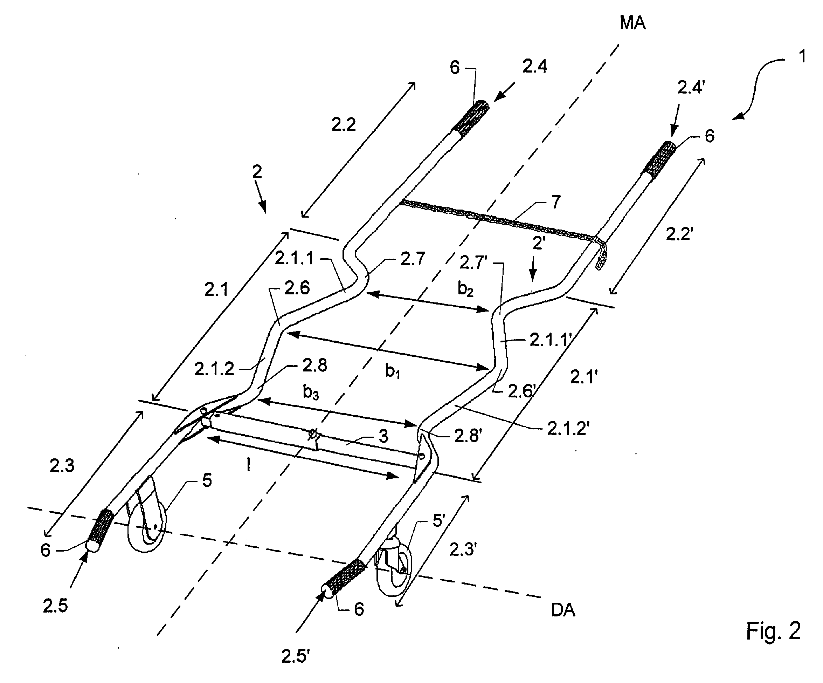

In den Figuren 1 und 2 ist jeweils eine mit 1 bezeichnete erfindungsgemäße Transportvorrichtung in perspektivischen Ansichten gezeigt. Die Transportvorrichtung 1 die zum Transport von Behältern 10, insbesondere von Blumentöpfen ausgebildet ist, weist zwei zueinander beabstandete, stangenförmige, bevorzugt rohr- oder hohlstangenförmige Längselemente 2, 2' auf, die miteinander durch zumindest einen Querträger 3 verbunden sind.

Gemäß dem die Erfindung tragenden Gedanken sind die Längselemente 2, 2' beispielweise durch Biegen so geformt, dass sie u.a. einen Teilbereich 2.1, 2.1' aufweisen, der an den jeweiligen Behälter 10 angepasst und zum zumindest abschnittsweisen Umgreifen des Behälters 10 ausgebildet ist. Weiterhin sind Transportrollen 5, 5' vorgesehen, deren Drehachse DA als Schwenkachse zum Anheben eines zwischen den Längselementen 2, 2' aufgenommenen Behälters 10 dient.

Die Längselemente 2, 2' weisen hierbei erste bis dritte Teilbereiche 2.1, 2.1', 2.2, 2.2', 2.3, 2.3' auf, wobei der zweite und dritte Teilbereich 2.2, 2.2', 2.3, 2.3' gerade oder im Wesentlichen gerade ausgebildet ist. Der zwischen den Teilbereichen 2.2, 2.2' und 2.3, 2.3' liegende erste Teilbereich 2.1, 2.1' ist durch geeignete Bearbeitung, insbesondere durch Kanten oder Biegen derart verformt, dass sich durch die beiden bezüglich zur Mittellängsachse MA spiegelsymmetrisch verlaufenden, zueinander beabstandeten Längselemente 2, 2' ein durch die ersten Teilbereiche 2.1, 2.1' seitlich begrenzter, aufgeweiteter Aufnahmebereich 4 der Breite b₁ ergibt. Hierzu sind die Längselemente 2, 2' im ersten Teilbereich 2.1, 2.1' mehrfach gebogen, und zwar derart, dass sich an einen nach außen gewölbten erster Wölbungsbereich 2.6, 2.6' zu beiden Seiten hin jeweils ein zweiter und dritter Wölbungsbereich 2.7, 2.7', 2.8, 2.8' anschließt, die jeweils nach innen zur Mittellängsachse MA gewölbt sind. Die ersten bis dritten Wölbungsbereiche 2.6, 2.6', 2.7, 2.7', 2.8, 2.8' verlaufen hierbei in der durch die zweiten und dritten Teilbereich 2.2, 2.2', 2.3, 2.3' der Längselemente 2, 2' aufgespannten Ebene. Im Bereich der nach innen gewölbten zweiten und dritten Wölbungsbereiche 2.7, 2.7', 2.8, 2.8' weisen die Längselemente 2, 2' zueinander Abstände b₂, b₃ auf, die kleiner sind als der Abstand b₁ der Längselemente 2, 2' im Bereich der ersten Wölbungsbereiche 2.6, 2.6'. Somit ergibt sich im Bereich des ersten Wölbungsbereichs 2.6, 2.6' zwischen den Längselementen 2, 2' der Aufnahmebereich 4, der durch zweiten und dritten Wölbungsbereiche 2.7, 2.7', 2.8, 2.8' vorder- und rückseitig begrenzt wird. Die zwischen den Wölbungsbereichen 2.6, 2.6', 2.7, 2.7', 2.8, 2.8' verlaufenden Teilelemente 2.1.1, 2.1.1' , 2.1.2, 2.1.2' der Längselemente 2, 2' sind vorzugsweise gerade ausgebildet, so dass innerhalb dieser Teilelemente 2.1.1, 2.1.1' , 2.1.2, 2.1.2' sowohl runde als eckige Behälter 10 aufgenommen und ausreichend geklemmt werden können, wie im folgenden näher beschrieben wird.

Zwischen den beiden Längselementen 2, 2' ist der Querträger 3 angeordnet, und zwar vorzugsweise im Bereich zwischen erstem und dritten Teilbereich 2.1, 2.1', 2.3, 2.3' der Längselemente 2, 2'. Der Querträger 3 ist mit den Längselementen 2, 2' vorzugsweise drehgelenkig verbunden, wobei die Gelenkachse vorzugsweise senkrecht zu der durch die Längselemente 2, 2' aufgespannte Ebene verläuft. Durch diese drehgelenkige Anbindung des Querträgers 3 an die Längselemente 2, 2' können die freien Enden 2.4, 2.4' der Längselemente 2, 2', wie durch die Pfeile in Figur 1 angedeutet zueinander verschwenkt werden, und zwar insbesondere derart, dass der durch die Wölbungsbereiche 2.6, 2.6', 2.7, 2.7', 2.8, 2.8' begrenzte Aufnahmebereich 4 in seiner Öffnungsweite verändert werden kann. Dadurch kann beispielsweise durch ein Auseinanderschwenken der freien Enden 2.4, 2.4' der Längselemente 2, 2' der Aufnahmebereich 4 vergrößert bzw. verbreitert werden und dabei ein zu transportierender Behälter 10 in den Aufnahmebereich 4 eingebracht werden. Anschließend werden die freien Enden 2.4, 2.4' der Längselemente 2, 2' derart zueinander verschwenkt, dass die der Mittellängsachse MA zugewandten Innenseiten der Teilelemente 2.1.1, 2.1.1', 2.1.2, 2.1.2' oder der ersten Wölbungsbereiche 2.6, 2.6' zumindest abschnittsweise an der Außenseite des Behälters 10 anliegen und diesen dabei zangenförmig umgreifen. Anschließend kann der Behälter 10 durch Anheben an den freien Enden 2.4, 2.4' der Längselemente 2, 2' transportiert werden, wobei durch einen zueinander gerichteten Druck auf diese freien Enden 2.4, 2.4' der Behälter 10 verklemmt wird.

Beim Anheben der Längselemente 2, 2' an den freien Enden 2.4, 2.4' dient die Drehachse DA der Transportrollen 5, 5', die im dritten Teilbereich 2.3, 2.3' an den Längselementen 2, 2' angeordnet sind, als Schwenkachse. Beim Verschwenken um diese Schwenkachse wird der jedem Aufnahmebereich 4 aufgenommene Behälter 10 mit geringem Kraftaufwand durch den Benutzer angehoben und kann mittels der Transportrollen auf dem Boden bzw. der Aufstellfläche durch Schieben bzw. Ziehen versetzt bzw. transportiert werden. Vorzugsweise ist zumindest eine der beiden Transportrollen 5, 5' als Lenkrolle ausgebildet, sodass die Transportvorrichtung 1 leichter lenkbar ist.

Besonders bevorzugt ist der Querträger 3 als Teleskopstange ausgebildet, wodurch die Länge l des Querträgers 3 veränderbar ist. Figur 1 zeigt hierbei die Transportvorrichtung 1 mit einem zusammengeschobenen Querträger 3, Figur 2 die Transportvorrichtung 1 mit dem Querträger 3 in einer auseinandergeschobenen Stellung. Aufgrund dieser Längenveränderlichkeit des Querträgers 3 können im Aufnahmeraum 4 Behälter 10 mit sehr unterschiedlicher Größe bzw. Durchmesser aufgenommen werden. Durch die Längenveränderlichkeit des Querträgers 3 wird vermieden, dass die Längselemente 2, 2' bei größeren Behältern 10 zu sehr auseinandergespreizt gehalten werden müssen, da dies einen erhöhten Kraftaufwand erfordert. Die Länge des Querträgers 3 kann insbesondere zwischen 25cm und 70 cm eingestellt werden, so dass im Aufnahmeraum 4 Behälter 10 mit einem Durchmesser oder einer Kantenlänge der Grundfläche zwischen 20 und 80 cm transportiert werden können.

Um einem Benutzer insbesondere bei längeren Transportwegen das kraftaufwendige Gegeneinanderdrücken der freien Enden 2.4, 2.4' der Längselemente 2, 2' zu ersparen, ist ein Spannelement 7 vorgesehen, das zwischen den beiden Längselementen 2, 2' gespannt die Klemmwirkung der Längselemente 2, 2' auf den Behälter 10 aufrechterhält. Dieses Spannelement 7 kann beispielsweise durch einen Spanngurt, eine Spannkette, ein Klettband oder ähnliche aus dem Stand der Technik bekannte Spannelemente 7 gebildet werden. Dieses Spannelement 7 ist vorzugsweise zwischen den freien Enden 2.4, 2.4' der Längselemente 2, 2' und dem Aufnahmebereich 4 angeordnet. Vorzugsweise verläuft dieses Spannelement zwischen den beiden gegenüberliegenden dritten Wölbungsbereichen 2.8, 2.8', sodass insbesondere bei Verwendung von leicht verrutschenden Spannelementen 7 eben dieses Verrutschen durch die Wölbungsbereiche 2.8, 2.8' vermieden wird.

Um zusätzlich zu der Klemmwirkung auch ein Durchrutschen beispielsweise von zylindrischen Behältern 10 aus dem Aufnahmebereich 4 heraus zu verhindern, können am Längselement 2, 2' insbesondere im ersten Wölbungsbereich 2.6, 2.6' und an den daran angrenzenden Teilelementen 2.1.1, 2.1.1', 2.1.2, 2.1.2' an den der Mittellängsachse MA zugewandten Innenseiten rutschhemmende Elemente beispielsweise in Form von Gumminoppen oder einer Gummierung vorgesehen sein. Durch diese rutschhemmenden Elemente wird die Reibung zwischen den Längselementen 2, 2' und dem zu transportierenden Behälter 10 erhöht, sodass ein Durchrutschen des Behälters 10 auch bei geringen Klemmkräften wirksam vermieden wird.

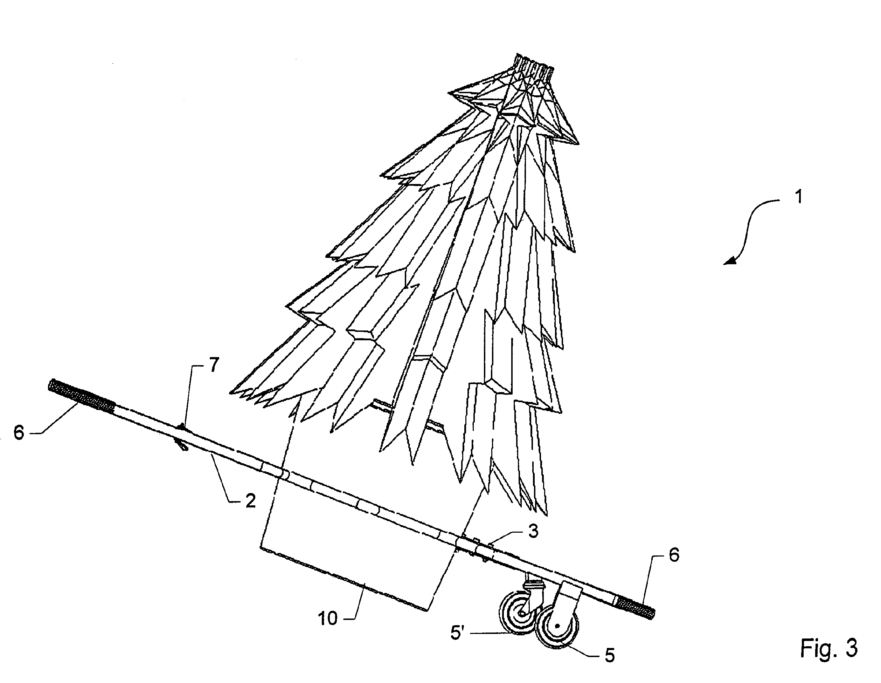

Aufgrund der Verschwenkbarkeit der beiden Längselemente 2, 2' zueinander und der nach vorne hin über die Querstrebe 3 überstehenden dritten Teilbereiche 2.3, 2.3' ist mit der erfindungsgemäßen Transportvorrichtung eine weitere Funktionalität gewährleistet. Durch die überstehenden dritten Teilbereiche 2.3, 2.3' bildet sich auf der dem Aufnahmeraum 4 gegenüberliegenden Seite des Querträgers 3 ein weiterer Aufnahmeraum 4.1 aus. In diesem Aufnahmeraum lässt sich beispielsweise ein einzelner Blumentopf aus einer Reihe von eng nebeneinander stehenden derartigen Blumentöpfen zangenartig umgreifen und anschließend herauszuziehen und zwar derart, dass dieser einzelne Blumentopf mit den nach vorne hin überstehenden dritten Teilbereiche 2.3, 2.3' seitlich umfasst wird und durch ein Auseinanderbewegen der freien Enden 2.4, 2.4' der Längselemente 2, 2' verklemmt wird. Durch die drehgelenkige Anbindung des Querträgers 3 bewegen sich die freien Enden 2.5, 2.5' bei einem Auseinanderdrücken der freien Enden 2.4, 2.4' aufeinander zu, sodass ein umgriffener Blumentopf zunächst verklemmt und anschließend beispielsweise durch ein Zurückziehen der Transportrichtung 1 aus der Reihe von Blumentöpfen separiert werden kann. Hierzu sind vorzugsweise die freien Enden 2.5, 2.5' der dritten Teilbereiche 2.3, 2.3' leicht nach innen in Richtung der Mittellängsachse MA gerichtet bzw. gebogen, so dass dadurch das Herausgleiten des Blumentopfs aus dem Aufnahmebereich 4.1 unterbunden wird. Anschließend kann der Blumentopf in den Aufnahmebereich 4 der Transportvorrichtung 1 eingebracht werden und zwischen den Längselementen 2.2, 2.2' verklemmt, wie zuvor beschrieben, transportiert werden (Figur 3).

In einer bevorzugten Ausführungsform weisen sowohl die freien Enden 2.4, 2.4' als auch die freien Enden 2.5, 2.5' Handgriffe 6 auf. Durch die Handgriffe 6 kann ein im Aufnahmebereich 4 aufgenommener Behälter 10 beispielsweise an Stufen, Treppen oder in einem Gelände, in dem die Transportvorrichtung 1 nicht aufgrund ihrer Transportrollen 5, 5' verschoben werden kann, von zwei Personen getragen werden, wobei jeweils eine Person im Bereich der freien Enden 2.4, 2.4' und 2.5, 2.5' angreifen.

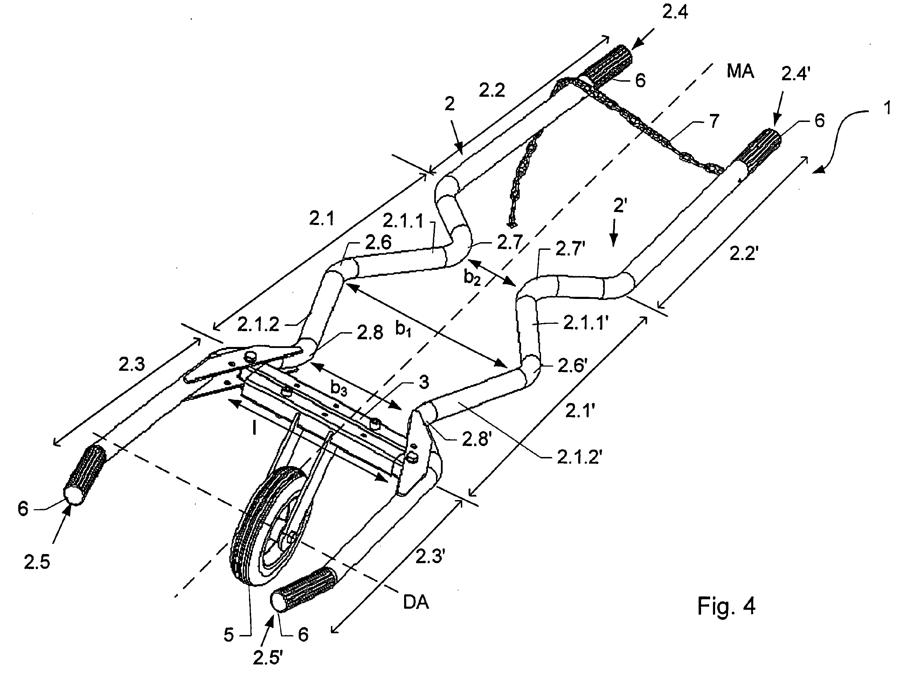

Figur 4 zeigt ein weiteres Ausführungsbeispiel der Erfindung, dessen wesentlicher Unterschied zum zuvor beschriebenen ersten Ausführungsbeispiel darin besteht, dass anstelle der beiden in den dritten Teilbereichen 2.3, 2.3' angeordneten Transportrollen 5, 5' lediglich eine Transportrolle 5 starr und mittig am Querträger 3 angeordnet ist. Dadurch wird ein schubkarrenartiges Transportieren von Behältern 10 ermöglicht, und zwar durch Verschwenken der Transportvorrichtung 1 um die Drehachse DA. Aufgrund der Verwendung von lediglich einer Transportrolle 5 ist eine kostengünstigere Herstellung der Transportvorrichtung 1 möglich.

Die Herstellung der Transportvorrichtung 1 kann aus jeglichen formstabilen Materialien, insbesondere aus Metall, Leichtmetall oder formstabilem Kunststoff erfolgen.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Transportvorrichtung
- 2, 2': Längselement
- 2.1, 2.1': erster Teilbereich
- 2.1.1, 2.1.1': Teilelement
- 2.1.2, 2.1.2': Teilelement
- 2.2, 2.2': zweiter Teilbereich
- 2.3, 2.3': dritter Teilbereich
- 2.4, 2.4': freies Ende
- 2.5, 2.5': freies Ende
- 2.6, 2.6': erster Wölbungsbereich
- 2.7, 2.7': zweiter Wölbungsbereich
- 2.8, 2.8': dritter Wölbungsbereich
- 3: Querträger
- 4: Aufnahmebereich
- 4.1: Aufnahmebereich
- 5, 5': Transportrollen
- 6: Handgriff
- 7: Spannelement
- 10: Behälter

- b₁: Breite
- b₂: Breite
- b₃: Breite
- l: Länge
- DA: Drehachse
- MA: Mittel längsachse

## Patentansprüche

1. Vorrichtung zum Transportieren von Behältern (10), insbesondere zum Transportieren von Pflanz- oder Blumentöpfen, mit zwei zueinander beabstandeten, stangenförmigen Längselementen (2, 2'), die durch zumindest einen Querträger (3) miteinander verbunden sind, **dadurch gekennzeichnet, dass** die Längselemente (2, 2') zumindest einen Teilbereich (2.1, 2.1') aufweisen, der an den Behälter (10) angepasst und zum zumindest abschnittsweisen Umgreifen des Behälters (10) ausgebildet ist und dass zumindest eine Transportrolle (5, 5') vorgesehen ist, deren Drehachse (DA) als Schwenkachse zum Anheben eines zwischen den Längselementen (2, 2') aufgenommenen Behälters (10) dient.

2. Vorrichtung nach Anspruch 1, **dadurch gekennzeichnet, dass** die Längselemente (2, 2') gelenkig, beispielsweise drehgelenkig, mit einander und/oder mit dem Querträger (3) verbunden sind.

3. Vorrichtung nach Anspruch 1 oder 2, **gekennzeichnet durch** ihre Ausbildung für ein zangenförmiges Umgreifen des Behälters (10).

4. Vorrichtung nach einem der vorhergehenden Ansprüche, **dadurch gekennzeichnet, dass** die Länge (l) des Querträgers (3) verstellbar, insbesondere teleskopisch verstellbar ist.

5. Vorrichtung nach einem der vorhergehenden Ansprüche, **dadurch gekennzeichnet, dass** zwischen den Längselementen (2, 2') durch Krümmung der Längselemente (2, 2') und/oder durch Abstandsvariation von Teilbereichen der Längselemente (2, 2') ein Aufnahmebereich (4) ausgebildet ist, wobei der Aufnahmebereich (4) beispielsweise durch Aufweiten oder Auswölben von zumindest einem Teilbereich dieser Längselemente (2, 2') gebildet ist.

6. Vorrichtung nach Anspruch 5, **dadurch gekennzeichnet, dass** der Aufnahmebereich (4) entlang der Mittellängsachse (MA) vorder- und rückseitig durch zwei den Abstand der Längselemente (2, 2') zueinander verringernde Elemente begrenzt ist, wobei die den Abstand der Längselemente (2, 2') zueinander verringernden Elemente beispielsweise in Richtung der Mittellängsachse (MA) gebogene oder gewölbte Teilbereiche (2.7, 2.7', 2.8, 2.8') sind.

7. Vorrichtung nach einem der vorhergehenden Ansprüche, **dadurch gekennzeichnet, dass** zwischen den Längselementen (2, 2') ein weiterer Aufnahmebereich (4.1) vorgesehen ist, und zwar auf der dem Aufnahmebereich (4) gegenüberliegenden Seite des Querträgers (3).

8. Vorrichtung nach einem der vorhergehenden Ansprüche, **dadurch gekennzeichnet, dass** zumindest eine Transportrolle (5, 5') als Lenkrolle ausgebildet ist.

9. Vorrichtung nach einem der vorhergehenden Ansprüche, **dadurch gekennzeichnet, dass** zwei Transportrollen (5, 5') vorgesehen sind, wobei jeweils eine Transportrolle (5, 5') an einem Längselement (2, 2') angeordnet ist.

10. Vorrichtung nach einem der Ansprüche 1 bis 8, **dadurch gekennzeichnet, dass** eine Transportrolle (5) vorgesehen ist, die mittig am Querträger (3) angeordnet ist.

11. Vorrichtung nach einem der vorhergehenden Ansprüche, **dadurch gekennzeichnet, dass** die Längselemente (2, 2') zumindest an einem freien Ende Handgriffe (6) aufweisen.

12. Vorrichtung nach einem der vorhergehenden Ansprüche, **dadurch gekennzeichnet, dass** ein Spannelement (7), insbesondere ein Spanngurt oder eine Spannkette vorgesehen ist, das beabstandet zum Querträger (3) angeordnet ist und zur Erzeugung einer Klemmung des Behälters (10) zwischen den Längsträgern (2, 2') ausgebildet ist.
